# EUROPEAN PATENT APPLICATION

(11) **EP 1 596 532 A2**
(43) Date of publication of application: **16.11.2005**
(21) Application number: 05252609.2
(22) Date of filing: 27.04.2005
(51) Int. Cl.: H04L 12/24

(54) **Diffserv path object for network management**

(30) Priority: 13.05.2004 US 844835
(71) Applicant: Marconi Intellectual Property (Ringfence) Inc., Warrendale, PA 15086 (US)
(72) Inventor: Morris, Stephen, Gorey, County Wexford (IE)
(74) Representative: O'Connell, David Christopher

(57) **Abstract**

A telecommunications system includes a network. The system includes an NMS in communication with the network having ServiceOn-Data with the QOS path object attached to a route object. The system includes a plurality of nodes in communication with the network which receives the QOS path object attached to the route word from the NMS through the network. A method for teleconferencing includes the steps of creating a QOS path object. There is the step of attaching the QOS path object to a route object.

## Description

### FIELD OF THE INVENTION

The present invention is related to the management of telecommunications networks. More specifically, the present invention is related to the management of telecommunications networks using a DiffServ class object attached to a route object.

### BACKGROUND OF THE INVENTION

Network services are evolving beyond simple virtual connections and bandwidth provision (i.e., speeds and feeds). This is due to a combination of (1) Commoditization of service provider offerings and (2) Enterprises outsourcing communications needs (e.g., layer 2/3 VPN, content delivery, hosting, etc.). The result is that the managed objects needed by service providers (in their network management products) are becoming more complex. One aspect of this complexity is that managed objects are increasingly distributed across the network. Distributed objects are harder to manage, and this translates into the need for more staffing with consequent higher prices. As networking evolves from a retail to a wholesale model, service providers need their vendors to leverage product infrastructure so that management costs are reduced as much as possible.

This invention provides a convenient means of merging the two areas of Traffic Engineering and QoS using the ServiceOn Data Route Object as a basis. Normally, these areas are considered in isolation from one another. This substantially reduces the time required, complexity of, and cost of applying user-defined DiffServ classes to MPLS networks. Also, by automating the provisioning of these classes to the network, the speed and accuracy of the operation is improved. Ultimately, this invention expedites the process of creating a new DiffServ class in the network. The guiding principle is that speed of service deployment facilitates rapid revenue generation.

### SUMMARY OF THE INVENTION

The present invention pertains to a telecommunications system. The system comprises a network. The system comprises an NMS in communication with the network having ServiceOn-Data with the QOS path object attached to a route object. The system comprises a plurality of nodes in communication within the network which receives the QOS path object attached to the route object from the NMS through the network.

The present invention pertains to a method for teleconferencing. The method comprises the steps of creating a QOS path object. There is the step of attaching the QOS path object to a route object.

### BRIEF DESCRIPTION OF THE DRAWINGS

In the accompanying drawings, the preferred embodiment of the invention and preferred methods of practicing the invention are illustrated in which:
Figure 1 is a schematic representation of best effort IP and DiffServ IP.
Figure 2 is a schematic representation of a DiffServ compliant network.

### DETAILED DESCRIPTION

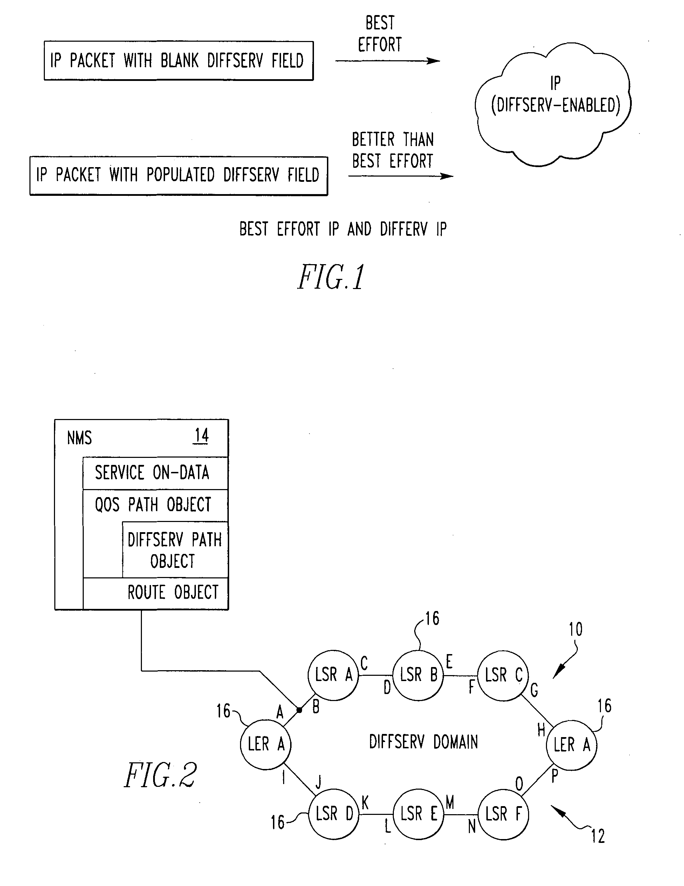

Referring now to the drawings wherein like reference numerals refer to similar or identical parts throughout the several views, and more specifically to figure 2 thereof, there is shown a telecommunications system 10. The system 10 comprises a network 12. The system 10 comprises an NMS 14 in communication with the network 12 having ServiceOn-Data with the QOS path object attached to a route object. The system 10 comprises a plurality of nodes 16 in communication with the network 12 which receives the QOS path object attached to the route object from the NMS 14 through the network 12.

Preferably, the QOS path object includes a DiffServ path object. The network 12 is preferably an MPLS or ATM or Frame Relay network 12, though it is also applicable to appropriately DiffServ-capable IP networks.

The present invention pertains to a method for teleconferencing. The method comprises the steps of creating a QOS path object. There is the step of attaching the QOS path object to a route object.

Preferably, the QOS path object includes a DiffServ class object. The attaching step preferably includes the step of attaching the DiffServ class object to the route object in a single operation.

Preferably, there is the step of provisioning automatically with ServiceOn-Data the route object with the DiffServ class object along a path. There is preferably the step of defining the route object for an LSP.

Preferably, there is the step of defining the route object for a designated transit list for an SPVC. The creating step preferably includes the step of defining QOS parameters for the DiffServ class object. Preferably, the path is over an MPLS network 12. Preferably, there is the step of sending the route object having the DiffServ class object to nodes 16 in the path.

### DiffServ classes

This is a method of providing different ways of forwarding IP traffic through a network. It is a little like the way ambulances can pass out ordinary traffic on roads: in the networking world, you can create a high-priority DiffServ class that allows specific traffic to get a better QoS than other traffic. Why would you want to do this? Well, if you're using voice-over-Internet, then the packets you generate will require a better QoS than email or Web traffic. So, you create a voice-over-IP DiffServ class. In order for IP packets to experience the associated QoS, they must be marked to receive it via the DiffServ field in the IP header. Then, any packets so marked will receive the QoS associated with the DiffServ class.

### ServiceOn-data

A commercial network management system package produced by Marconi in use on many sites throughout the world.

### Route Object

A software element of Service-On Data that allows the user to specify a route through a network. The RO is used to select the nodes that you wish to cross to get from edge to edge. This gives you the required path across the network, e.g., an ATM or MPLS network. Once the RO is defined, then the connection can be created, e.g., an ATM SPVC or an MPLS LSP.

In the operation of the invention, the deployment of quality of service (QoS) in IP networks can be achieved using a number of techniques, e.g., DiffServ. In this scheme, a 6-bit field in the IP header is used to define the QoS handling received by packets as they traverse the DiffServ domain. Figure 1 illustrates two IP packets landing at the edge of such a DiffServ domain. The topmost packet has no value in its DiffServ field with the result that it receives best effort service. The lower packet has a value in its DiffServ field and it receives an appropriate service level greater than best effort.

The service level in this case is, in fact, the QoS and can be described as: the overall experience of the packet as it traverses the network 12. Ultimately, this is the end user experience, e.g., if the lower packet in figure 1 is part of a voice-over-IP phone call, then the user will receive a better service than if the packet was sent best effort. Typical QoS parameters include:
· Queueing Choice
· Priority within the queue
· Queue discipline
· Scheduling at the egress interface

The DiffServ Path Object is required for recording specific network 12 paths over which the required QoS level is to be applied. It defines the set of nodes 16 and interfaces over which a given user-defined DiffServ class is to be applied.

Figure 2 illustrates a DiffServ-compliant network 12 that contains a range of MPLS nodes 16 with all interfaces labeled "a" through "p". It is required that a user-defined DiffServ class with the example (any other DiffServ value can be used if required) value of 0x111111 (i.e., all 6 bits set to 1) on the path "a" to "h" is assumed. This ensures that packets traversing this path will receive the level of service associated with the user-defined DiffServ class. It is assumed in this that the nodes 16 are all Marconi devices.

The procedure for creating the required QoS setup is as follows:
· Connect to each node using some means, such as the command line interface (or SNMP)
· Define the required DiffServ class and its associated parameters
· Attach the DiffServ class to each of the interfaces "a" through "h"
· Enable the new DiffServ class so that IP traffic is processed by it

IP traffic with the appropriate DiffServ markings will then receive the required level of service from each of the associated nodes 16 in Figure 2. The problem with this scheme is twofold:
· The user is required to make a large amount of multi-node, device-level configuration
· Once configured, it is hard to remember the settings
· The complexity of creating the DiffServ classes is error-prone

The DiffServ Path Object invention solves these problems by providing a scheme for setting the parameters and recording the path. ServiceOn Data records all the parameters (just once, not once per node) as well as the path (i.e., interfaces "a" through "h") using the existing Route Object. The user creates the DiffServ class and then attaches it to the Route Object in a single operation. ServiceOn Data then automatically provisions the RO (including the DiffServ class) along the required path. This reduces the amount of human input and allows re-use of the RO. The latter may already have been defined during Traffic Engineering (e.g., creating an explicit route object for an LSP, or a designated transit list for an SPVC) so it is a simple operation to just attach the DiffServ class details to the RO.

The DiffServ Path-Object therefore, provides for merging the two areas of Traffic Engineering and QoS using the RO as its foundation. In other words, if the DiffServ class is required on n nodes (where n is 1 or more); then instead of n user-directed operations (on n nodes), just one operation is required and ServiceOn Data takes care of the others. An added benefit is that the DiffServ Path Object can be cloned to allow for modified versions to be efficiently created with minimum effort.

The above discussion has centered on configuring the user-defined DiffServ class. There are also economies available during network 12 discovery. A simple example is: let us say a user has gone the long way round and manually configured a DiffServ class on multiple nodes, attaching it to all the required interfaces and then enabling the service. ServiceOn Data can discover this information and use it to populate a new DiffServ Path Object. This facility offers a migration path to the use of merged Traffic Engineering and QoS. The discovery is handled by a specific piece of software (called "Discovery"). This software uses a number of administrative protocols (e.g., ICMP) to first of all determine the existence of nodes. Then, the constituents of those nodes can be determined (using SNMP) and recorded. DiffServ classes that have been configured can be discovered and recorded into the Service-On Data database for subsequent retrieval and use.

The DiffServ Path Object can be implemented as an addon to ServiceOn Data. Two major elements are involved:
(1) Defining the DiffServ Path Object QoS parameters
(2) Attaching the DiffServ Path Object to the RO
(3) Provisioning the DiffServ Path Object in the network

ServiceOn Data provides a platform for implementing this invention, but it need not be restricted to this NMS 14. NMS products, such as, Nortel Contivity, Cisco IP Solution Center can use this invention. Many NMS products provide support for DiffServ classes, so any utilities that ease this process for end-to-end scenarios are useful.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A method for teleconferencing comprising the steps of:
creating a QOS path object; and
attaching the QOS path object to a route object.

2. A method as described in Claim 1 wherein the QOS path object includes a DiffServ class object.

3. A method as described in Claim 2 wherein the attaching step includes the step of attaching the DiffServ class object to the route object in a single operation.

4. A method as described in Claim 3 including the step of provisioning automatically with ServiceOn-Data the route object with the DiffServ class object along a path.

5. A method as described in Claim 4 including the step of defining the route object for an LSP.

6. A method as described in Claim 5 including the step of defining the route object for a designated transit list for an SPVC.

7. A method as described in Claim 6 wherein the creating step includes the step of defining QOS parameters for the DiffServ class object.

8. A method as described in Claim 7 wherein the path is over an MPLS network.

9. A method as described in Claim 8 including the step of sending the route word having the DiffServ class object to nodes in the path.

10. A telecommunications system comprising:
a network;
an NMS in communication with the network having ServiceOn-Data with a QOS path object attached to a route object; and
a plurality of nodes in communication with the network which receives the QOS path object attached to the route word from the NMS through the network.

11. A system as described in Claim 10 wherein the QOS path object includes a DiffServ path object.

12. A system as described in Claim 11 wherein the network is an MPLS or ATM or Frame Relay network.
